# EUROPÄISCHE PATENTSCHRIFT

(11) **EP 0 756 102 B1**
(45) Veröffentlichungstag und Bekanntmachung des Hinweises auf die Patenterteilung: **27.10.1999**
(21) Anmeldenummer: 96109365.5
(22) Anmeldetag: 12.06.1996
(51) Int. Cl.: F16F 13/10, B60K 5/12

(54) **Motorlager für Kraftfahrzeuge**
Engine support for motor vehicles
Support pour moteurs de véhicules automobiles

(30) Priorität: 27.07.1995 DE 19527563
(43) Veröffentlichungstag der Anmeldung: 29.01.1997
(73) Patentinhaber: Lemförder Metallwaren AG, 49448 Lemförde (DE)
(72) Erfinder: Meyering, Frank, 49393 Lohne (DE); Vossel, Andreas, 49068 Osnabrück (DE)

(56) Entgegenhaltungen:
- EP-A- 0 098 330
- EP-A- 0 262 296
- EP-A- 0 357 245
- DE-A- 3 222 204
- DE-C- 3 225 700
- DE-C- 4 435 271
- FR-A- 2 468 794
- FR-A- 2 559 864
- FR-A- 2 674 590
- PATENT ABSTRACTS OF JAPAN vol. 94, no. 011 & JP-A-06 307489 (KURASHIKI KAKO CO LTD), 1.November 1994,
- PATENT ABSTRACTS OF JAPAN vol. 013, no. 237 (M-833), 5.Juni 1989 & JP-A-01 049731 (TOKAI RUBBER IND LTD), 27.Februar 1989,

## Beschreibung

Die Erfindung bezieht sich auf ein Motorlager nach dem Oberbegriff des Patentanspruches 1. Ein derartiges Motorlager ist aus der DE 38 16 445 -A1- bekannt.

Bei einer derartigen Anordnung wird durch die schrägen Begrenzungsflächen der Entkopplungsmembran und durch deren Einbau ohne axiales Spiel eine Minderung der Geräuschentwicklung in dem Motorlager bei kleinen Schwingungsamplituden und eine kostengünstige Herstellung der Entkopplungsmembran erreicht.

Es ist Aufgabe der vorliegenden Erfindung, ein Motorlager nach dem Oberbegriff des Anspruchs 1 in der Weise weiterzubilden, daß bei kurzzeitig auftretenden Druckdifferenzen zwischen den Kammern eine Überdehnung der Entkopplungsmembran in die Durchbrechungen des Käfigs hinein und somit ein schlagartiges Anlegen an die Wandung der Durchbrechungen vermieden wird.

Die Erfindung löst diese Aufgabe durch die Merkmale nach dem Patentanspruch 1.

Dies ermöglicht im Falle plötzlich auftretender Druckdifferenzen zwischen den beiden Kammern einen kontrollierten Druckausgleich zwischen den Kammern über einen sich öffnenden Kanal der Entkoppelungsmembran im Bereich der dazu besonders ausgebildeten Durchbrechung, so daß durch diesen Druckausgleich die Ausbeulung der Entkopplungsmembran in die Durchbrechungen hinein begrenzt und ein schlagartiges Anlegen an die Wandung der Durchbrechungen verhindert wird. Dadurch werden Klappergeräusche vermieden und eine geräuschlose Lagerfunktion erreicht. Außerdem wirkt sich die erfindungsgemäße Ausbildung günstig auf die Lebensdauer der elastisch verformbaren Kammerwände des Federkörpers aus.

Dadurch, daß der Rand der Entkopplungsmembran mit sanfter axialer Vorspannung in einer Ausnehmung zwischen zwei als Käfig ausgebildeten Scheiben einer Ventilplatte radial beweglich eingesetzt ist kann die Entkopplungsmembran sich bei Druckdifferenzen in den beiden Kammern in die Durchbrechungen der Käfigwandungen hineinwölben und sich dabei aus der sanften Randeinspannung herausziehen. Nach Entlastung schiebt sich der Rand der aus Gummi hergestellten Entkopplungsmembran durch die Eigenelastizität des Materials selbsttätig nach außen in die sanfte Einspannlage zurück.

Die durch die erfindungsgemäße Ausbildung angestrebte Wirkung kann begünstigt werden durch einen profilierten Querschnitt der Entkopplungsmembran, vorzugsweise im Bereich der Durchbrechung, in der sich der Überströmkanal öffnet. Eine andere Möglichkeit zur Beeinflussung der angestrebten Wirkung kann darin bestehen, daß die Entkopplungsmembran nicht nur am Rande, sondern auf ganzer Fläche mit sanfter Vorspannung zwischen Scheiben des Käfigs aus festem Werkstoff eingespannt ist.

In der Zeichnung ist ein Ausführungsbeispiel der Erfindung dargestellt. Es zeigen:
- Figur 1: ein Motorlager zur Hälfte in Ansicht und zur Hälfte im vertikalen Schnitt in einer Achsebene,
- Figur 2: eine Draufsicht auf die Ventilplatte,
- Figur 3: einen Schnitt nach der Linie III - III in Figur 2,
- Figur 4: einen im Maßstab vergrößerten Teilschnitt der Einzelheit Y in Figur 3 bei entspannter Entkopplungsmembran,
- Figur 5: im vergrößerten Maßstab die Einzelheit X in Figur 3 bei ausgewölbter Entkopplungsmembran und
- Figur 6: einen Teilschnitt entsprechend Figur 4 in Wirkungsfunktion des Erfindungsmerkmals.

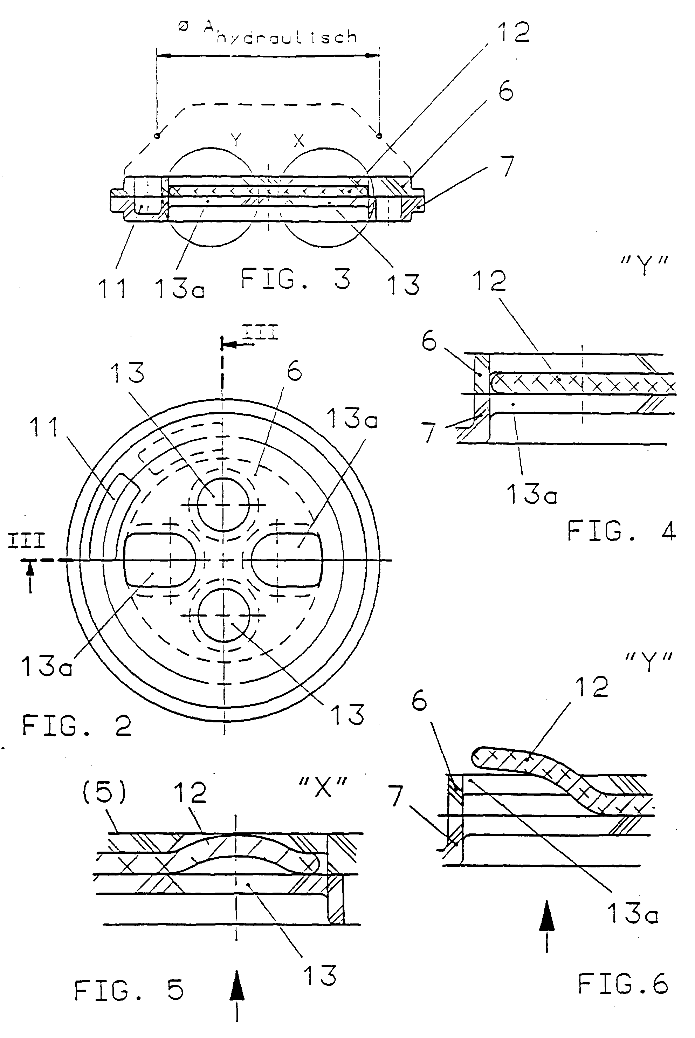

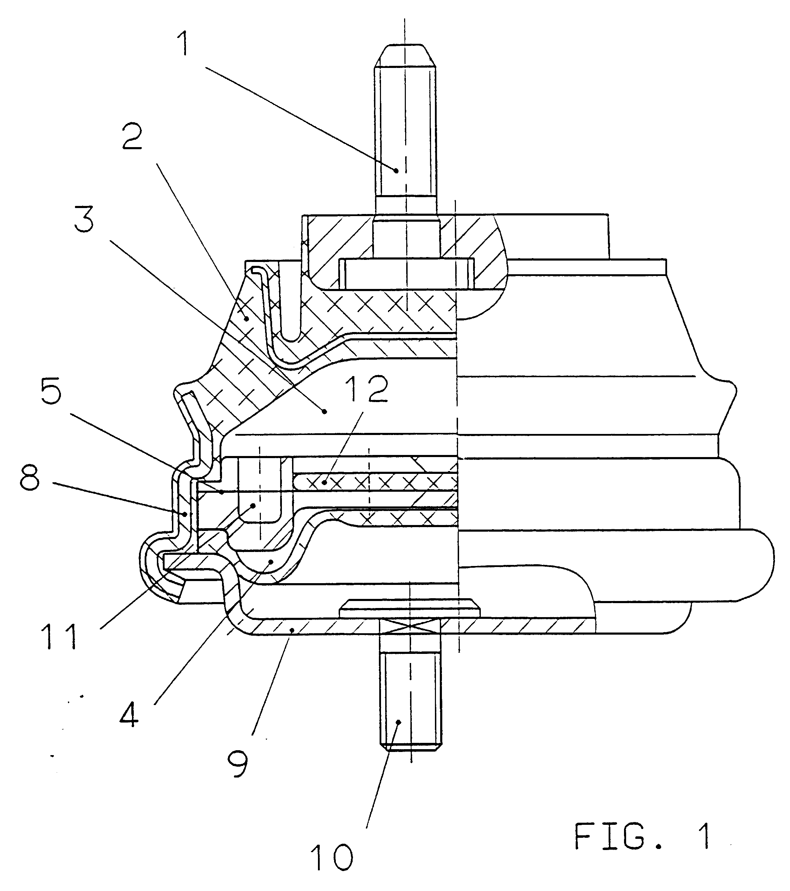

Bei einem Motorlager sind unterhalb eines mit einem Befestigungszapfen 1 ausgebildeten Federkörpers 2 zwei mit einer Dämpfungsflüssigkeit gefüllte Kammern 3 und 4 angeordnet, die durch eine Ventilplatte 5 aus miteinander verspannten Scheiben 6 und 7 am Rande eingespannt sind. Ein oberes Gehäuseteil 8 und ein unteres Gehäuseteil 9 sind am Rande fest miteinander verbunden. Das untere Gehäuseteil 9 weist einen weiteren Befestigungszapfen 10 auf. In der aus den beiden Scheiben 6 und 7 bestehenden Ventilplatte 5 befindet sich ein Drosselkanal 11, der die beiden Kammern 3 und 4 miteinander verbindet und bei Schwingungen mit großer Amplitude einen Flüssigkeitsausgleich zwischen den beiden Kammern 3 und 4 wechselweise ermöglicht. Durch die geometrische Ausbildung der beiden Scheiben 6 und 7 der Ventilplatte 5 wird zwischen den beiden Scheiben 6 und 7 ein Käfig gebildet, der eine Entkopplungsmembran 12 aus einem elastisch verformbaren Werkstoff, zum Beispiel Gummi, aufnimmt. Die Entkopplungsmembran 12 ist mit ihrem Rand in eine Ausnehmung zwischen den beiden Scheiben 6 und 7 mit sanfter Vorspannung in axialer Richtung eingelegt, so daß sie sich bei Verformungen radial nach innen aus dieser Einsparung herauszieht und infolge ihrer Materialelastizität wieder einschieben kann. Die beiden den Käfig für die Entkopplungsmembran 12 bildenden Scheiben 6 und 7 weisen aufgrund der Spannungsverteilung in der Entkopplungsmembran 12 wenigstens je drei Durchbrechungen 13 mit einem durch schräge Begrenzungsflächen sich von der Entkopplungsmembran nach außen verjüngenden Querschnitt auf. Vorzugsweise sind Bohrungen mit einer konischen Senkung auf der der Entkopplungsmembran 12 zugewandten Seite vorgesehen, wie es deutlich in der Figur 5 dargestellt ist. Wenigstens eine der Durchbrechungen 13a ist radial nach außen bis zum Rand der Entkopplungsmembran 12 durchgeführt, so daß die äußere Begrenzung dieser Durchbrechung 13a mit dem Rand der Entkopplungsmembran 12 in Überdeckung liegt und die Entkopplungsmembran 12 bei plötzlich auf das Motorlager einwirkenden Stoßbelastungen sich mit ihrem Rande in die Durchbrechung 13a hineinwölben kann. Dadurch öffnet sich ein Verbindungskanal zwischen den beiden Kammern 3 und 4. Im Beispiel sind zwei spiegelbildlich und diametral zueinander angeordnete Durchbrechungen 13a radial nach außen bis zum Rande der Entkopplungsmembran 12 durchgeführt. Entsprechend sind auch die übrigen Durchbrechungen 13 spiegelbildlich zueinander angeordnet. Die Wirkung der Durchbrechungen 13a ergibt sich deutlich aus einem Vergleich der Zeichnungsfiguren 5 und 6. Die Figur 6 offenbart das Öffnen eines Überströmkanals zwischen den Kammern 3 und 4 im Falle stoßartiger Belastungen. In dem Ausführungsbeispiel besitzen die Durchbrechungen 13a radial eine größere Ausdehnung als die nicht bis zum Rande der Entkopplungsmembran 12 durchgeführten Durchbrechungen 13. Dabei weisen die Durchbrechungen 13a eine angenähert ovale Form auf, wobei die Längsachse der ovalen Form radial gerichtet ist.

Nicht dargestellt sind in den Zeichnungen profilierte Querschnitte der Entkopplungsmembran 12, welche im übrigen nicht nur mit sanfter Vorspannung am Rande eingespannt ist, sondern auch auf ganzer Fläche mit sanfter Vorspannung zwischen den Scheiben 6 und 7 angeordnet sein kann.

### BEZUGSZEICHENLISTE:

- 1: Befestigungszapfen
- 2: Federkörper
- 3: Flüssigkeitskammer
- 4: Flüssigkeitskammer
- 5: Ventilplatte
- 6: Scheibe
- 7: Scheibe
- 8: Gehäuse
- 9: Gehäuse
- 10: Befestigungszapfen
- 11: Drosselkanal
- 12: Entkopplungsmembran
- 13: Durchbrechung
- 13a: Durchbrechung

## Patentansprüche

1. Motorlager mit hydraulischer Dämpfung für Kraftfahrzeuge, welches wenigstens zwei in einem Gehäuse mit wenigstens teilweise elastisch verformbaren Wandungen ausgebildete, mit einer Dämpfungsflüssigkeit gefüllte Kammern und eine gemeinsame Wand der Kammern mit einer Ventilplatte aufweist, in der in einem Käfig eine als Scheibe aus einem elastisch verformbaren Werkstoff mit gleichbleibendem Querschnitt ausgeführte Entkopplungsmembran angeordnet ist, wobei die Durchbrechungen des die Entkopplungsmembran ohne axiales Spiel senkrecht zur Kammerwand berührenden Käfigs durch schräge Begrenzungsflächen einen sich von der Entkopplungsmembran nach außen verjüngenden Querschnitt aufweisen, dadurch gekennzeichnet, daß der Rand der Entkopplungsmembran (12) mit sanfter axialer Vorspannung in einer Ausnehmung zwischen zwei als Käfig ausgebildeten Scheiben (6, 7) einer Ventilplatte (5) radial beweglich eingesetzt ist, und daß wenigstens eine der Durchbrechungen (13a) radial nach außen bis zum Rand der Entkopplungsmembran (12) durchgeführt ist, so daß die Öffnung eines Kanals zwischen den Kammern (3,4) durch Einwölben des Randes der Entkopplungsmembran (12) in die Durchbrechung (13a) bei größeren, plötzlich auftretenden Druckdifferenzen in den Kammern (3,4) ermöglicht ist.

2. Motorlager nach Anspruch 1, dadurch gekennzeichnet, daß die bis zum Rand der Entkopplungsmembran (12) durchgeführte Durchbrechung (13a) eine mit dem Rand der Entkopplungsmembran (12) in Überdeckung liegende Begrenzung aufweist.

3. Motorlager nach den Ansprüchen 1 oder 2, dadurch gekennzeichnet, daß die Durchbrechung (13a) radial eine größere Ausdehnung aufweist als die nicht bis zum Rand der Entkopplungsmembran (12) durchgeführten Durchbrechungen (13).

4. Motorlager nach Anspruch 3, dadurch gekennzeichnet, daß die Durchbrechung (13a) radial eine angenähert ovale Form aufweist.

5. Motorlager nach einem der vorhergehenden Ansprüche, dadurch gekennzeichnet, daß mehrere, in der Draufsicht symmetrisch zueinander und zur Mittelachse des Motorlagers angeordnete Durchbrechungen (13a) wenigstens mit einem Teilbereich ihrer radial äußeren Begrenzung bis zum Rand der Entkopplungsmembran (12) durchgeführt sind.

6. Motorlager nach einem der vorhergehenden Ansprüche, dadurch gekennzeichnet, daß die Entkopplungsmembran (12) einen profilierten Querschnitt aufweist.

7. Motorlager nach einem der vorhergehenden Ansprüche, dadurch gekennzeichnet, daß die Entkopplungsmembran (12) auf ganzer Fläche mit sanfter Vorspannung zwischen Scheiben (6,7) aus festem Werkstoff eingespannt ist.

## Claims

1. Hydraulically damped engine bearing for motor vehicles, comprising at least two chambers, which are formed in a housing having at least partially elastically deformable walls and are filled with a damping fluid, and a common wall of the chambers with a valve plate, in which an isolating diaphragm in the form of a disc made of an elastically deformable material and having a constant cross section is disposed in a cage, wherein the openings of the cage, which contacts the isolating diaphragm without axial play at right angles to the chamber wall, by virtue of oblique boundary surfaces have a cross section tapering in an outward direction from the isolating diaphragm, characterized in that the edge of the isolating diaphragm (12) is inserted with gentle axial prestressing in a radially movable manner in a recess between two discs (6, 7) of a valve plate (5), which are designed as a cage, and that at least one of the openings (13a) extends radially outwards up to the edge of the isolating diaphragm (12) so that opening of a channel between the chambers (3, 4) is enabled through bulging of the edge of the isolating diaphragm (12) into the opening (13a) in the event of greater, suddenly occurring pressure differences in the chambers (3, 4).

2. Engine bearing according to claim 1, characterized in that the opening (13a) extending up to the edge of the isolating diaphragm (12) has a boundary overlapping the edge of the isolating diaphragm (12).

3. Engine bearing according to claims 1 or 2,
characterized in that the opening (13a) radially has a greater extension than the openings (13) which do not extend up to the edge of the isolating diaphragm (12).

4. Engine bearing according to claim 3, characterized in that the opening (13a) radially has an approximately oval shape.

5. Engine bearing according to one of the preceding claims, characterized in that a plurality of openings (13a), which in plan view are disposed symmetrically to one another and to the centre line of the engine bearing, extend at least with a sub-region of their radially outer boundary up to the edge of the isolating diaphragm (12).

6. Engine bearing according to one of the preceding claims, characterized in that the isolating diaphragm (12) has a shaped cross section.

7. Engine bearing according to one of the preceding claims, characterized in that the isolating diaphragm (12) is clamped over its entire surface with gentle prestressing between discs (6, 7) made of solid material.

## Revendications

1. Support de moteur à amortissement hydraulique pour véhicules automobiles, qui comprend au moins deux chambres qui sont formées dans un boîtier avec des parois au moins partiellement élastiquement déformables et qui sont remplies d'un liquide d'amortissement, et une paroi commune des chambres pourvue d'un tiroir de soupape dans lequel est disposée, dans une cage, une membrane de désaccouplement réalisée sous forme de disque en matériau élastiquement déformable de section constante, les percements de la cage (laquelle cage entre en contact avec la membrane de désaccouplement sans jeu axial perpendiculairement à la paroi des chambres) présentant, par des faces de délimitation obliques, une section se rétrécissant depuis la membrane de désaccouplement vers l'extérieur, **caractérisé** en ce que le bord de la membrane de désaccouplement (12) est inséré à mobilité radiale, avec une légère précontrainte axiale, dans un évidement entre deux disques (6, 7) d'un tiroir de soupape (5) qui sont réalisés sous forme de cage, et en ce qu'au moins un des percements (13a) est dirigé radialement vers l'extérieur jusqu'au bord de la membrane de désaccouplement (12), de sorte que l'ouverture d'un canal entre les chambres (3, 4) est rendue possible, en cas de différences de pression importantes apparaissant soudainement dans les chambres (3, 4), par le cambrement vers l'intérieur du bord de la membrane de désaccouplement (12) dans le percement (13a).

2. Support de moteur selon la revendication 1, **caractérisé** en ce que le percement (13a) dirigé jusqu'au bord de la membrane de désaccouplement (12) présente une délimitation qui se trouve en recouvrement avec le bord de la membrane de désaccouplement (12).

3. Support de moteur selon la revendication 1 ou 2, **caractérisé** en ce que le percement (13a) présente radialement une plus grande étendue que les percements (13) qui ne sont pas dirigés jusqu'au bord de la membrane de désaccouplement (12).

4. Support de moteur selon la revendication 3, **caractérisé** en ce que le percement (13a) présente radialement une forme approximativement ovale.

5. Support de moteur selon l'une quelconque des revendications précédentes, **caractérisé** en ce que plusieurs percements (13a), disposés en vue de dessus symétriquement les uns par rapport aux autres et par rapport a l'axe médian du support de moteur, sont dirigés au moins par une région partielle de leur délimitation radialement extérieure jusqu'au bord de la membrane de désaccouplement (12).

6. Support de moteur selon l'une quelconque des revendications précédentes, **caractérisé** en ce que la membrane de désaccouplement (12) présente une section profilée.

7. Support de moteur selon l'une quelconque des revendications précédentes, **caractérisé** en ce que la membrane de désaccouplement (12) est tendue sur toute sa surface avec une légère précontrainte entre deux disques (6, 7) en matériau rigide.
